# EUROPEAN PATENT APPLICATION

(11) **EP 4 053 204 A1**
(43) Date of publication of application: **07.09.2022**
(21) Application number: 20885238.4
(22) Date of filing: 21.04.2020
(51) Int. Cl.: C08K 7/26, C08K 3/015, C08K 3/34, C08K 3/22, C08K 3/08, C08L 83/00

(54) **FAR-INFRARED RAY- AND ANION-EMITTING SILICONE RUBBER COMPOSITION USING MACSUMSUK GRANULES AND MANUFACTURING METHOD THEREFOR**

(30) Priority: 05.11.2019 KR 20190140090
(71) Applicant: Macsumsuk GM Co., Ltd., Gyeongsangbuk-do 38911 (KR)
(72) Inventor: KWAK, Sung Gun, Yeongcheon-si Gyeongsangbuk-do 38882 (KR); KWAC, Da Eun, Busan 48065 (KR)
(74) Representative: Loo, Chi Ching
(86) International application number: PCT/KR2020/005261
(87) International publication number: WO 2021/091034

(57) **Abstract**

The present invention relates to a far-infrared ray- and anion-emitting silicone rubber composition using macsumsuk granules and a manufacturing method therefor. The manufacturing method for the far-infrared ray- and anion-emitting silicone rubber composition using macsumsuk granules of the present invention comprises: a slurry preparation step of mixing a macsumsuk-pulverized material and water at a predetermined ratio to obtain a slurry; a first mixing step of adding an antibiotic agent and a foaming agent to the slurry to obtain a granulation mixture; a granule molding step of processing the granulation mixture in a spray-drying method by using a granulator to prepare macsumsuk granules having an average grain size in the range of 0.1-1.5 mm; and a second mixing step of preparing a silicone composition, which is then mixed with the prepared macsumsuk granules to manufacture a silicone rubber composition. According to the present invention, the addition of macsumsuk granules in the manufacturing procedure of the silicone rubber composition can lead to enhancements in antibiotic properties as well as deodorizing function.

## Description

### Technical Field

The present invention relates to a silicone rubber composition and a manufacturing method therefor, that is, to a far-infrared ray- and anion-emitting silicone rubber composition using Macsumsuk granules, which has a far infrared ray- and anion-emitting function by use of Macsumsuk granules, and a manufacturing method therefor.

### Background Art

Silicon means a silicon represented by the element symbol Si. As a material, it is a dark gray metal phase (for example, silicon wafer for semiconductors). It is an unique chemical material that combines organic and inorganic properties, is applied in various forms, and is an essential high-functional material used in most industrial fields (polymer formed by connecting silicon to which organic groups are bonded by siloxane bonds [Si-O-Si]). This refers to a polymer in which silicon (Si, Organosilicone) containing organic groups and oxygen are connected to each other by chemical bonds, and a polymer formed by connecting silicon to which organic groups are bonded by siloxane bonds (Si-O-Si). That is, it is artificially synthesized.

A Silicone rubber is classified into High-temperature-vulcanizing (HTV), which is cured by applying a large amount of heat depending on the curing temperature, and Room-temperature-vulcanizing (RTV), which is naturally cured at room temperature. However, in recent years, as the liquid silicone rubber using addition reaction has been commercialized, it has become impossible to classify silicone based on the conventional curing temperature alone. Therefore, if the silicone is reclassified according to the degree of polymerization or viscosity of the polymer, it can be divided into a heat cure rubber (HCR), a liquid silicone rubber (LSR), and a room temperature curing silicone.

The silicone rubber is made of network-structured molecules and the number of bonding points (cross-linking points) is usually in a loose structure with one for every hundreds of R₂-Si-O.

In such a structure, since molecular chains cannot move with each other, fluidity is lost, but the degree of freedom of molecules is rather large, which gives elasticity and shows the properties of rubber. However, as the crosslinking of the rubber progresses, the degree of freedom and the elasticity of molecules decrease, making the silicone rubber hard.

One of the characteristics of the silicone rubber is cold/heat resistance, which maintains excellent physical properties in a wide temperature range of -100°C to 350°C, and has a saturation point of -60°C to 70°C (general synthetic rubber: -20°C to -40°C). °C) to maintain elasticity even at low temperatures where general rubber is destroyed. In addition, the use at room temperature is semi-permanent and the general using temperature range is 150°C to 250°C. When used intermittently for a short time, it can be used up to 350°C.

The second characteristic is that it is an inert material that is non-toxic and harmless to the human body, so that it can be used in various fields and can be widely used in food equipment, cosmetics industry, food containers, and medical supplies

The third characteristic is chemical resistance, which can be affected by strong acids or strong alkalis, but has excellent resistance to inorganic chemicals such as general acids, bases, and salts, alcohols, and polar organic compounds such as animals and plants.

The fourth characteristic is excellent oil resistance at high temperatures where general organic rubbers except fluoro rubber cannot be used.

In addition, the fifth characteristic is fire retardancy. That is, the silicone rubber does not bum easily because the content of hydrocarbons in its molecular structure is less than that of general organic rubber. Also, because the silicone rubber does not contain halogen elements, it does not generate toxic gas during combustion.

In the conventional silicone rubber, a liquid silicone rubber composition that is cured by a hydrosilylation reaction to form a non-conductive rubber or a conductive rubber is well known and is widely used in the fields of electricity, electronics, construction, machinery, and the like. The non-conductive liquid silicone rubber base, which is the main subject of the non-conductive silicone rubber composition, is formulated with an alkenyl group-containing organopolysiloxane, a reinforcing silica filler, and, if necessary, a non-conductive inorganic filler.

In addition, the conductive liquid silicone rubber base, which is the main subject of the conductive liquid silicone rubber composition, is a mixture of an alkenyl group-containing organopolysiloxane, a conductive filler, and, if necessary, a conductive inorganic filler. Also, it is common to produce in a batch type by putting these raw materials into a mixer such as a double-arm kneader mixer (dough mixer), a Henschel mixer, or a planetary mixer and mixing them until uniform. Japanese Patent Publication No. 1992-280082 proposes a continuous production method by continuously putting an alkenyl group-containing organopolysiloxane and a filler into a biaxial extruder and discharging them while mixing under heating.

Japanese Laid-Open Patent Publication No. 1998-152563 proposes a method for preparing a liquid silicone rubber base by mixing and dispersing a fine conductive filler such as carbon black in a liquid alkenyl group-containing organopolysiloxane using a stirring device having a rotating disk, which is rotated at high speed.

However, since these liquid silicone rubber bases are heated to a high temperature due to heating or frictional heat during production thereof, it is necessary to cool them at room temperature and then mix them with a crosslinking agent and a curing catalyst to cure them. However, it cannot be cured immediately after production thereof.

Japanese Patent Publication No. 1995-122000 discloses a method of manufacturing a silicone elastomer sponge by mixing a curing agent, an organopolysiloxane, an emulsifier, water and a foaming agent formed of an aqueous emulsion consisting of a viscous agent with a silicone rubber base and curing them. However, it is necessary to cool the silicone rubber bases at room temperature and then mix them with a crosslinking agent and a curing catalyst to cure them and it cannot be cured immediately after production.

Japanese Laid-Open Patent Publication No. 1984-12832 discloses a method for obtaining a silicone rubber sponge from an aqueous emulsion comprising steps of freezing and thawing a hydroxyl-terminated diorganopolysiloxane and a condensation reaction curable silicone emulsion composed of an organotin catalyst and colloidal silica and then removing water from them. At this time, the emulsion can be mixed with organic amines, thickeners and fillers other than colloidal silica. However, the freezing, the thawing, and the water removal of silicone emulsions require enormous heat energy and time, so that it is inefficient.

In Japanese Laid-Open Patent Publication No. 2000-169590, an aqueous emulsion of a hydroxysilylation reaction curable silicone composition is mixed with an adhesion promoter, a silicone resin, and an aqueous dispersion of a carbon black to prepare an aqueous emulsion/dispersion and then it is coated on a fabric to be cured, thereby making an elastomer. However, there is a problem in that it is difficult to prepare the aqueous dispersion of the carbon black.

Japanese Laid-Open Patent Publication No. 2002-114860 discloses a method for producing a silicone rubber sponge by mixing a silicone rubber base composed of an alkenyl group-containing polyorganosiloxane and a reinforcing silica filler with a polyorganohydrogen siloxane, a platinum catalyst or organic peroxide, and a foaming agent consisting of an absorbent polymer gelled by absorbing water or water and an emulsifier and then heating and curing them. However, there are problems in that the gelled water absorbent polymer is very viscous and a huge load is applied to the mixer when mixing with other components while stirring.

In addition, as synthetic silicones, there are a styrene-butadiene silicone (SBR; copolymer of styrene and butadiene), a nitrile silicone (NBR; copolymer of butadiene and acrylonitrile), a butyl silicone (copolymer of isobutylene and 2-3% isoprene or other unsaturated hydrocarbon), a chloroprene silicone (chloroprene polymer), polysilicon polysulfide (synthesized from ethylene dihalide and alkaline polysulfide) etc. Also, a silicone for stereo and a fluorosilicone etc. are used.

In the polymer production by the above polymerization reaction, it may depend on the control of variables such as the molecular weight of the post-treated polymer and the uniformity of the polymer to produce a polymer having predictable and desirable performance properties.

In addition, the silicone has a disadvantage in that a characteristic odor of silicone is generated. As a method for producing nitrile silicone as described above, Korean Patent Application No. 1997-36022 discloses a method for the production of nitrile silicone. It can be synthesized by copolymerizing acrylonitrile and 1,3-butadiene in an aqueous emulsion. After these monomers have been polymerized, it is necessary to recover the polymer from the aqueous emulsion. The invention discloses an improved method for the recovery of nitrile rubber from a nitrile rubber containing emulsion, the method comprising the steps of adding an antioxidant to the nitrile rubber containing emulsion to produce a stabilized nitrile rubber emulsion, adding a salt and an acid to said stabilized nitrile rubber emulsion to produce a coagulated nitrile rubber slurry, wherein said coagulated nitrile rubber slurry is comprised of serum and nitrile rubber crumb, separating the nitrile rubber crumb from the serum in the coagulated nitrile rubber slurry, mixing the nitrile rubber crumb into wash water to produce a nitrile rubber slurry, adjusting the pH of the nitrile rubber slurry so as to be within the range of about 5 to about 8, and separating the nitrile rubber crumb from the wash water of the nitrile rubber slurry, so that the Nitrile silicone is recovered from emulsions.

Here, the nitrile is also called a cyano compound and is an organic compound having a molecular structure in which a cyano group (-C=N) and a carbon atom are bonded. The nitrile is a neutral substance in which the oxygen atom of carboxylic acid is replaced with a nitrogen atom. The acrylonitrile can be obtained by reacting a hydrogen cyanide with an acetylene or an ethylene oxide, or by an ammonia oxidation by reacting an ammonia with a propylene in the presence of a catalyst.

The residual acid remaining in the polymer after solidification can cause significant problems, including increased corrosion of the polymer. Also, the presence of acids in the polymer can also adversely affect the vulcanization rate and the acidic polymers with low pH vulcanize at a slower rate than neutral and alkaline polymers.

This reduction in vulcanization rate is undesirable because it increases the time required to cure the silicone, which is often a bottleneck in commercial operations. In addition, since the amount of acid added to the coagulation and emulsion can be changed, there is a disadvantage that uncertainty is at least partially generated. Moreover, it becomes a cause of the generation of a stench peculiar to silicone.

In addition, a calcium carbonate (CaCO₃), a glass fiber, a mica, and the like have been mainly used as fillers in the conventional silicon manufacturing industry. However, these fillers have a disadvantage in that they are only a function of a simple extender because they are deformed by heat and have poor durability, corrosion resistance, abrasion resistance and deodorization effect.

On the other hand, Japanese Laid-Open Patent Publication No. JPH6-200081 discloses a silicone compound, wherein it is described that a hydrated magnesium silicate clay mineral is used to reduce odor generated by thermal decomposition or vaporization during vulcanization. Also, the amount of the clay mineral can be used in an amount of 5 parts by weight to 75 parts by weight based on 100 parts by weight of the total silicone composition and in actual embodiments, the low odor silicone is prepared by using from a minimum of 20 parts by weight to a maximum of 70 parts by weight. However, since the content ratio of clay minerals compared to the actual silicone composition is high, there is a problem in that the use of the silicone composition is limited due to changes in the physical properties of the silicone etc.

Meanwhile, the applicant of the present invention has been registered for "a method for preparing an odorless rubber composition using Macsumsuk powder and an odorless rubber composition obtained therefrom" (Korean Patent Registration No. 10-0668105, Patent Literature 1).

In Patent Literature 1, after calcining the Macsumsuk powder, the Macsumsuk powder in nano-particulate state is obtained by using the rapid expansion of supercritical solution and then added it to a conventional rubber raw material to prepare the odorless rubber composition.

In Patent Literature 1, Macsumsuk nanoparticles are added to it, thereby improving the odorless function.

However, studies on the improvement of antibacterial properties using Macsumsuk as a raw material are still insufficient.

In addition, in another application of the applicant of the present invention, "a method of preparing an antimicrobial plastic masterbatch using macsumsuk granule " (Korean Patent Registration No. 10-1975955, Patent Literature 2), the Macsumsuk granule is added to the production of the plastic masterbatch to improve the antibacterial properties of plastic products. However, this also relates to plastic products and studies on silicone rubber products are still insufficient.

### Patent Literature

Patent Literature 1: Korean Patent Registration No. 10-0668105 (January 05, 2007)
Patent Literature 2: Korean Patent Registration No. 10-1975955 (April 30, 2019)

### Disclosure

### Technical Problem

The far-infrared ray- and anion-emitting silicone rubber composition using Macsumsuk granules and a manufacturing method therefor of the present invention are for solving the above problems, and the present invention is intended to improve the antibacterial properties as well as the odor-eliminating function by adding Macsumsuk granules in the manufacturing process of a silicone rubber composition.

### Technical solution

According to one aspect of the present invention so as to accomplish these objects, there is provided to a method for manufacturing a far-infrared ray- and anion-emitting silicone rubber composition using Macsumsuk granules, the method including: a slurry manufacturing step of sintering pulverized Macsumsuk to obtain a sintered compact and then mixing the sintered compact with water at a certain ratio to obtain a slurry; a first mixing step of adding an antibacterial substance and a foaming agent to the slurry to obtain a granulation mixture; a granule molding step of processing the granulation mixture by a spray drying method using a granulator to manufacture Macsumsuk granules having an average particle size in a range of 0.1 to 1.5 mm; and a second mixing step of preparing a silicone composition and then mixing the prepared Macsumsuk granules to manufacture a silicone rubber composition.

In the above configuration, the antibacterial substance contains 0.3 to 1.5 parts by weight of titanium dioxide, 0.001 to 0.01 parts by weight of silver nanoparticles, and 0.1 to 0.5 parts by weight of zirconium oxide based on 100 parts by weight of the slurry.

In addition, the foaming agent contains calcium carbonate and sodium carbonate mixed at a weight ratio of 1:1, and is added at 0.15 to 1.5 parts by weight based on 100 parts by weight of the slurry.

In addition, in the second mixing step, 0.1% to 10% by weight of Macsumsuk granules is mixed with the remaining amount of a silicone composition.

The silicone rubber composition according to one aspect of the present invention is manufactured by the above manufacturing method.

### Advantageous Effects

According to the present invention, it is possible to improve the antibacterial properties as well as the odor-eliminating function by adding Macsumsuk granules in the manufacturing process of a silicone rubber composition.

### Brief Description of Drawings

The above and other objects, features and advantages of the present invention will be more apparent from the following detailed description taken in conjunction with the accompanying drawings, in which:
FIG. 1 is a graph illustrating the emissivity of Macsumsuk.
FIG. 2 is a graph illustrating the spectral emissivity of Macsumsuk.
FIG. 3 is a photomicrograph of Macsumsuk granules in the present invention.
FIGS. 4 to 12 are photographs illustrating the report of Experimental Example 3.
FIGS. 5 to 17 are photographs illustrating the report of Experimental Example 4.
FIG. 18 is a photograph illustrating a silicone rubber plate (a.k.a. 'Macsumsukdokkaebi') manufactured using the composition of the present invention.

### Best Mode

### Mode for Invention

Hereinafter, the far-infrared ray- and anion-emitting silicone rubber composition using Macsumsuk granules and a manufacturing method therefor of the present invention will be described in detail.

### 1. Slurry manufacturing step

A slurry is obtained by mixing pulverized Macsumsuk with water at a certain ratio.

As pulverized Macsumsuk, an ore may be pulverized and used, but it is preferable to use the ore that has been sintered and then pulverized.

The components of such Macsumsuk are presented in Table 1 below.

**[Table 1]**

| <Components of Macsumsuk and contents of components> | |
|---|---|
| Name of component | Content (% by weight) |
| Silicon dioxide (SiO₂) | 68.80 |
| Aluminum oxide (Al₂O₃) | 12.99 |
| Iron oxide (Fe₂O₃) | 2.47 |
| Calcium oxide (CaO) | 1.99 |
| Magnesium oxide (MgO) | 0.56 |
| Potassium oxide (K₂O) | 4.53 |
| Sodium oxide (Na₂O) | 6.25 |
| Titanium dioxide (TiO₂) | 0.23 |
| Phosphorus pentoxide (P₂O₅) | 0.06 |
| Manganese oxide (MnO) | 0.06 |
| Loss on ignition | 2.09 |

Macsumsuk is a rock belonging to the quartz porphyry among igneous rocks and is easily weathered and brittle as a whole. In particular, white feldspar is often kaolinized, and biotite is also almost oxidized and scattered in the form of iron oxide.

Macsumsuk contains a large amount of amphibole, and is known to contain a large amount of magnesium oxide (MgO) to emit α-rays and have a positive effect on living things.

The wavelength of far-infrared rays emitted from Macsumsuk is within a range of 8 to 14 µm, and this is known as the most beneficial wavelength band to living bodies. Far-infrared rays in this wavelength band are known to activate cells of living bodies and promote metabolism.

Focusing on the fact that the emissivity of far-infrared rays emitted when Macsumsuk is finely powdered (1 to 6 µm) is higher than the emissivity of far-infrared rays emitted from Macsumsuk in the rock state, in the present invention, Macsumsuk is powdered, particularly calcined and then powdered, formed into granules, and used as a carrier accommodating a molten plastic raw material therein. When formed in this way, the plastic raw material and the inorganic components of Macsumsuk form a firm bond inside, and it is possible to suppress decreases in physical properties such as strength of plastic injection products and to prevent decreases in appearance quality.

Other functions of Macsumsuk include adsorption due to porosity, precipitation of minerals, control of water quality, and increase of dissolved oxygen in water.

In particular, Macsumsuk reacts with oxygen to have O₂ and OH (hydroxyl group) in remarkably highly oxidized forms and thus exhibits significantly strong oxidizing and reducing properties. As a result, Macsumsuk penetrates cell membranes of bacteria and alters proteins of the cell membranes to destroy the bacterial cells and kill the bacteria.

This means that it is possible to minimize the use of separate antibacterial substances.

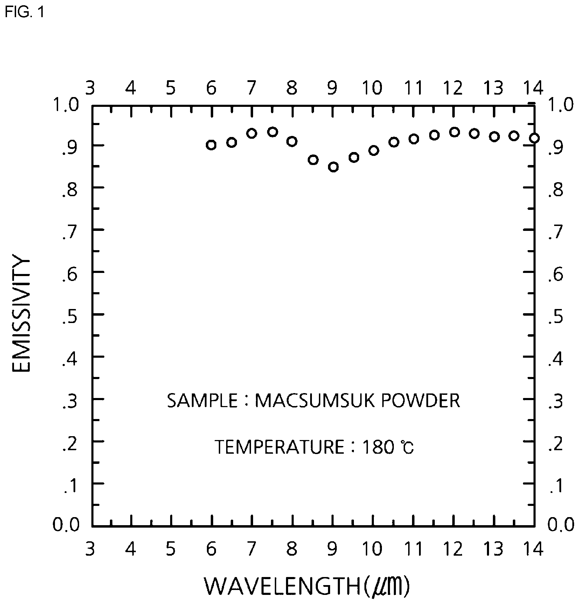

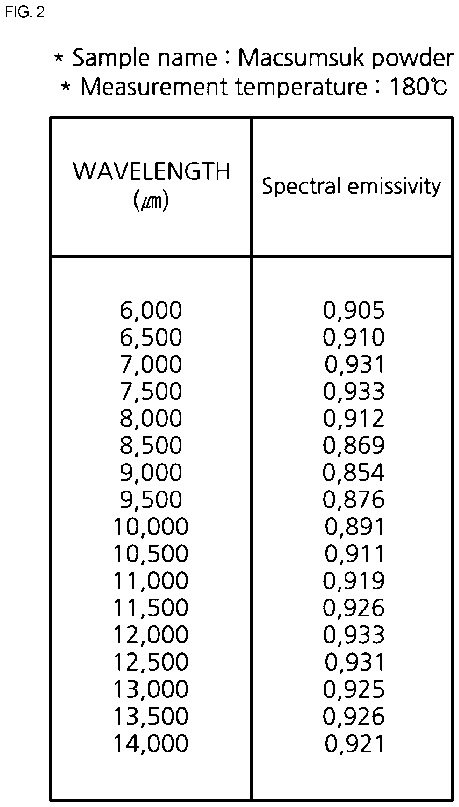

The amount of far-infrared rays emitted from Macsumsuk is illustrated in FIG. 1 and the spectral emissivity is illustrated in FIG. 2. The unit of emissivity in FIG. 1 is W/m²·µm when measured at 180°C, and it can be seen that the amount of far-infrared rays emitted from Macsumsuk is as high as that from a black body. The graph of FIG. 2 illustrates a result measured by the Korea Far Infrared Applied Evaluation Institute.

This process will be described in more detail as follows.

First, ore, such as Macsumsuk or kaolin, zeolite, bentonite, or mica, pulverized to 20 mm or less, is loaded into the furnace, and then the temperature and pressure are adjusted so that the temperature reaches 1,150°C.

By the primary ignition, the pressure of the LPG gas (hereinafter referred to as 'gas') in the furnace is adjusted to 0.1 kg/hr so that the temperature reaches 300°C in 1 hour. After 1 hour, the gas pressure is adjusted to 0.125 kg/hr so that the temperature reaches 500°C in 1 hour.

When the temperature reaches 500°C, the gas pressure is adjusted to 0.15 kg/hr so that the temperature reaches 700°C in 1 hour. When the internal temperature of the furnace reaches 700°C, the gas pressure is adjusted to 0.2 kg/hr and the temperature is adjusted to reach 850°C. When the temperature reaches 850°C, this temperature is maintained for about 1 hour for complete combustion of the organic substances contained in the raw material while the gas pressure is fixed at 0.2 kg/hr.

When the combustion of the organic substances is completed, the gas pressure is adjusted to 0.25 kg/hr and the temperature is raised to 950°C in 1 hour. When the temperature reaches 950°C, the gas pressure is again increased to 0.3 kg/hr, and the temperature is raised to 1,040°C in 1 hour.

After 1 hour, when the temperature reaches 1,040°C, the inside of the furnace is allowed to be in an incomplete combustion state, the internal temperature of the furnace is equalized by increasing the internal pressure of the furnace to stabilize the sintered state of the entire raw material. After that, the furnace pressure is maintained and the temperature is adjusted to reach to 1,150°C in 5 hours.

When the temperature reaches 1,150°C, the furnace pressure is increased by reducing the exhaust volume while the gas pressure is fixed, and the temperature is maintained at 1,150°C for 1 hour so that the chemical components of Macsumsuk form bonds for recrystallization, namely, covalent bonds. When sintering is completed, fire in the furnace is put out, the fire is extinguished while the temperature is gradually lowered and the exhaust port is closed, and then the temperature is adjusted to reach 1,000°C in 2 hours. When the temperature reaches about 300°C after the elapse of 30 hours, the furnace is completely opened and cooled by 100°C per hour.

Thereafter, the manufactured sintered compact is first pulverized into particles of 10 mm or less using a crusher, and then secondly pulverized to 5 mm or less. Next, the sintered particles pulverized to 5 mm or less are mixed with water at a ratio of about 2:1 and placed in a wet pulverizer to manufacture a slurry finely pulverized to an average particle size of 20 µm or less.

### 2. First mixing step

A foaming agent is added to increase the porosity of granules, and an antibacterial substance for imparting an antibacterial function is added, and then stirring is performed to obtain a granulation mixture.

The foaming agent used is one in which calcium carbonate and sodium carbonate are mixed together at a weight ratio of 1:1, and the foaming agent is added at 0.15 to 1.5 parts by weight based on 100 parts by weight of the slurry.

It is preferable to use silver nanoparticles and titanium dioxide and zirconium oxide (ZrO₂) as the antibacterial substance.

The foaming agent generates carbon dioxide by thermal decomposition during calcination, and carbon dioxide generated inside the granules forms pores inside the granules, and then the gas is released to between the granular particles to increase the porosity, so that the silicone composition penetrates inside the granules and improves the physical properties of the silicone rubber product during molding.

The antibacterial substance is preferably added in an amount of 0.401 to 2.1 parts by weight based on 100 parts by weight of the slurry.

More specifically, 0.3 to 1.5 parts by weight of titanium dioxide, 0.001 to 0.1 parts by weight of silver nanoparticles, and 0.1 to 0.5 parts by weight of zirconium oxide (ZrO₂) are preferably used together.

### 3. Granule molding step

Macsumsuk granules are obtained by molding the granulation mixture into granules having an average particle size within a range of 0.1 to 100 µm using a granulator.

The spray drying method is preferably applied to the granulator.

In the granule molding step, more specifically, the hot stove burner of the granulator is ignited to raise the temperature so that the internal temperature of the furnace reaches 1,000°C. When the temperature reaches 1,000°C, the blower is operated to move the heat into the cyclone. When the internal temperature reaches 300°C, the nozzle is put in the lower part of the cyclone, and the granulation mixture finely pulverized is raised up to the upper point where the weight flows at a pump pressure of 40 kgf/cm².

At this time, the discharged liquid falls by the hot air flowing in from the upper side of the cyclone to cause a vortex, and a ring shape is formed by this. The moisture contained in the raw material evaporates by the internal heat maintained at 300°C to form pores, thereby obtaining Macsumsuk granules having pores and a particle size of 80 to 900 µm.

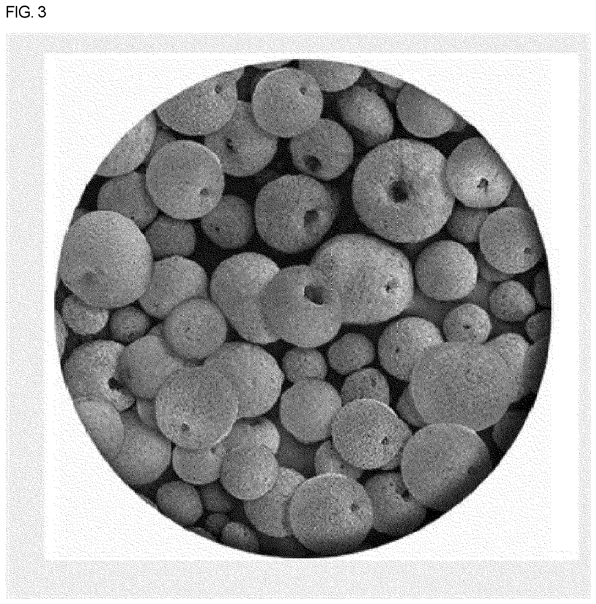

In this process, when the moisture content in the slurry is increased, the moisture contained in the granules is rapidly vaporized inside. At this time, the pressure of the formed bubbles increases by temperature expansion, and when the pressure is higher than a certain value, the formed bubbles penetrate the spherical surface and the granules are formed in an annular shape as illustrated in FIG. 3. Small pores are formed at the place where water molecules have been of the annular granules from which water vapor have escaped, the site popped the inside is annular of 10 to 500 µm, and serves to reduce the specific gravity of the granules and serves as a carrier for the silicone composition, and as a result, the bonding force is improved.

### 4. Second mixing step

A silicone composition is prepared, and then mixed with the prepared Macsumsuk granules to manufacture a silicone rubber composition.

More preferably, 0.5% to 15% by weight of Macsumsuk granules is mixed with the remaining amount of a silicone composition.

At this time, the obtained Macsumsuk granules may be pulverized once more so that the average particle size becomes about 0.1 µm to 50 µm, and then mixed with a silicone composition.

### <Example 1>

Macsumsuk ore pulverized to 20mm or less was loaded into the furnace, and then the LPG gas pressure in the furnace was adjusted to increase the internal temperature of the furnace to 1,150°C. After that, the internal temperature was maintained at 1,150°C for 1 hour so that the chemical components of Macsumsuk formed bonds for recrystallization, namely, covalent bonds. When sintering was completed, fire in the furnace was put out, the fire was extinguished while the temperature was gradually lowered and the exhaust port was closed, and then the temperature was adjusted to reach 1,000°C in 2 hours. When the temperature reached about 300°C after the elapse of 30 hours, the furnace was completely opened and cooled by 100°C per hour, thereby manufacturing a sintered compact.

Subsequently, the manufactured sintered compact was first pulverized into particles of 10 mm or less using a crusher, and then secondly pulverized to 5 mm or less. Next, the sintered particles pulverized to 5 mm or less were mixed with water at a ratio of about 2:1 and placed in a wet pulverizer to manufacture a slurry finely pulverized to an average particle size of 20 µm or less.

Thereafter, based on 100 parts by weight of the slurry, calcium carbonate and sodium carbonate were mixed at a weight ratio of 1:1 to prepare a foaming agent, and the foaming agent was added at 0.3 parts by weight based on 100 parts by weight of the slurry.

Based on 100 parts by weight of the slurry, 0.8 parts by weight of titanium dioxide, 0.005 parts by weight of silver nanoparticles, and 0.3 parts by weight of zirconium oxide were added as an antibacterial substance, and stirring was performed to manufacture a granulation mixture.

Next, a granulator was prepared, the hot stove burner of the granulator was ignited to raise the temperature so that the internal temperature of the furnace reached 1,000°C. When the temperature reached 1,000°C, the blower was operated to move the heat into the cyclone. When the internal temperature reached 300°C, the nozzle was put in the lower part of the cyclone, and the granulation mixture finely pulverized was raised up to the upper point where the weight flowed at a pump pressure of 40 kgf/cm². The discharged liquid fell by the hot air flowing in from the upper side of the cyclone to cause a vortex, and a ring shape illustrated in FIG. 3 was formed by this. The moisture contained in the raw material evaporated by the internal heat maintained at 300°C to form pores, thereby manufacturing Macsumsuk granules having pores and a particle size of 80 to 900 µm.

The far-infrared emissivity of the manufactured Macsumsuk granules was measured to be 0.901 at a measurement temperature of 40°C, and anions were 1.815 ion/cc in terms of the number of anions when the anions emitted from the measurement object were measured at room temperature of 20°C, a relative humidity of 30%, and a number of anions in the atmosphere of 54/cc using a charged particle measuring instrument.

### <Example 2> Manufacture of silicone rubber composition 1

A silicone rubber composition was manufactured by mixing and stirring 4.0% by weight of the Macsumsuk granules of Example 1 with 96% by weight of a silicone composition.

As the silicone composition, 23.0% by weight of polyphenylene ether, 33.0% by weight of a thermoplastic resin obtained by polymerizing a mixture of an aromatic alkenyl compound, an alkenyl cyanide compound, and an alkenyl monomer capable of being polymerized with these monomers, 21.0% by weight of styrene resin, 12.0% by weight of methyl ethyl ketone-soluble substances (total free polymers), and 11.0% by weight of total alkenyl cyanide compounds were mixed together and used.

At this time, as the methyl ethyl ketone-soluble substances, one containing 13% by weight of a polymer having an alkenyl cyanide compound content of 6% by weight; 30% by weight of a polymer having an AC content of 15% by weight; 21% by weight of a polymer having an AC content of 30% by weight; and 36% by weight of a polymer having an AC content of 50% by weight was used.

### <Example 3> Manufacture of silicone rubber composition 2

A composition was manufactured in the same manner as in Example 2 except that 8% by weight of Macsumsuk granules was mixed with 92% by weight of a silicone composition.

### <Experimental Example 1> Experiment on deodorizing effect

As Comparative Example 1, a pure silicone composition was prepared as a rubber composition, and the deodorizing effect of Examples and Comparative Examples was examined.

The degree of odor of the silicone rubber compositions of Examples 2 and 3 and Comparative Example 1 was measured at 3 hour intervals from immediately after the production, and the results are presented in Table 2 below.

At this time, the measurement of the odor intensity was performed as follows by a sensory measurement method.

The odor intensity of the smell was measured by the olfactory sense of selected healthy students immediately after the silicone rubber compositions of Examples and Comparative Examples were taken out. At the time of measurement, a place where wind did not blow at all and there was no other smell from the surroundings was chosen. As the smell investigation judge, 10 healthy subjects were selected who had a normal olfactory sense and were students who came to the investigation place where the smell was emitted for the first time. The intensity detected by the judge at the selected measurement place was displayed as the degree of smell and recorded along with the personal information. The degree of smell by the sensory determination method is presented in Table 2 below.

**[Table 2]**

| <Classification of sensory test of degree of smell> | | |
|---|---|---|
| **Degree of smell** | **Classification of smell intensity** | |
| 0 | Odorless (odor is not detected at all) | None |
| 1 | Slight odor (odor is detected slightly) | Threshold |
| 2 | Moderate odor (moderate odor is detected) | Moderate |
| 3 | Strong odor (strong odor is detected) | Strong |
| 4 | Extremely strong odor (greatly strong odor is detected) | Very Strong |
| 5 | Unbearable odor (unbearable odor is detected) | Over Strong |

As the determination method, the degree of smell determined by the majority of judges among the degrees of smell detected by the respective judges by the above method was adopted as the degree of smell, and a higher degree of smell was chosen when the number of judges was the same. It was determined as acceptable when the degree of smell was 2 or less, and it was determined as unacceptable when the degree of smell was 3 or more. As other experimental conditions, the silicone rubber compositions of Examples and Comparative Examples were put into completely sealed packs (50 cm in width, length, and height) immediately after manufacture, then taken out at 3 hour intervals, and subjected to the experiment by the sensory method. In order to minimize the opening and closing of the door, the opening and closing was performed in an airtightly closed state.

**[Table 3]**

| <Result of sensory test of degree of smell> | | | | | | | | | | | | |
|---|---|---|---|---|---|---|---|---|---|---|---|---|
| **Division** | **Time (hr)** | | | | | | | | | | | |
| | 0 | 3 | 6 | 9 | 12 | 15 | 18 | 21 | 24 | 27 | 30 | 33 |
| Comparative Example | 5 | 5 | 5 | 5 | 5 | 5 | 5 | 5 | 5 | 5 | 5 | 5 |
| Example 2 | 2.8 | 2.8 | 2.7 | 2.7 | 2.6 | 2.6 | 2.5 | 2.5 | 2.4 | 2.3 | 2.2 | 2.1 |
| Example 3 | 2.7 | 2.6 | 2.5 | 2.4 | 2.3 | 2.2 | 2.1 | 2.0 | 2.0 | 1.9 | 1.8 | 1.7 |

As presented in the table, the deodorizing effect is excellent from immediately after the production and the silicone odor is further eliminated as time passes in the case of the silicone rubber compositions according to the present invention, but there is almost no silicone odor eliminating effect in the case of Comparative Example. Thus, it has been confirmed that the Macsumsuk granules according to the present invention can significantly eliminate silicone odor by being contained and stirred in a silicone composition during the manufacture of the silicone composition.

### <Experimental Example 2> Experiment to confirm modification of protein in powdered milk

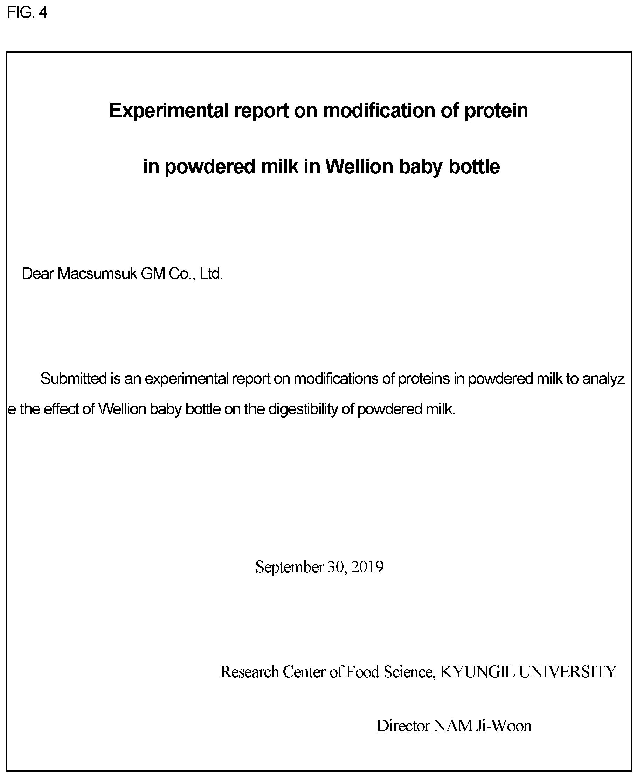

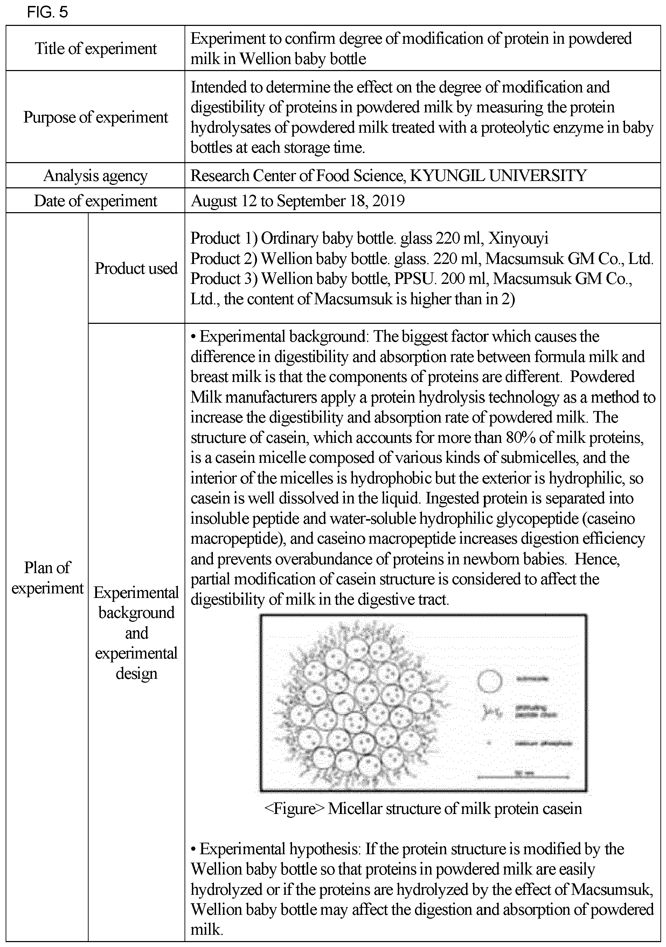

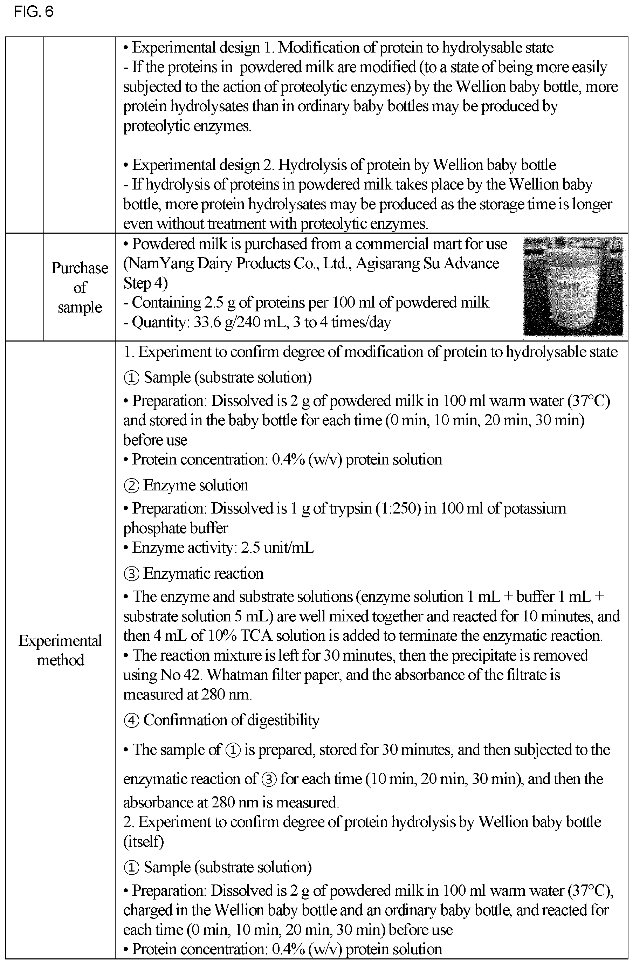

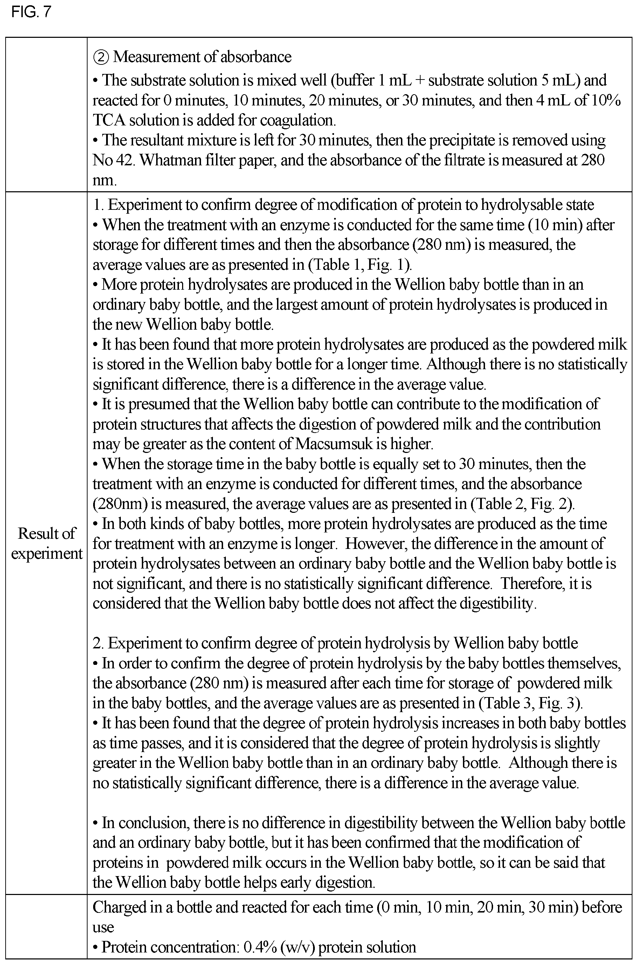

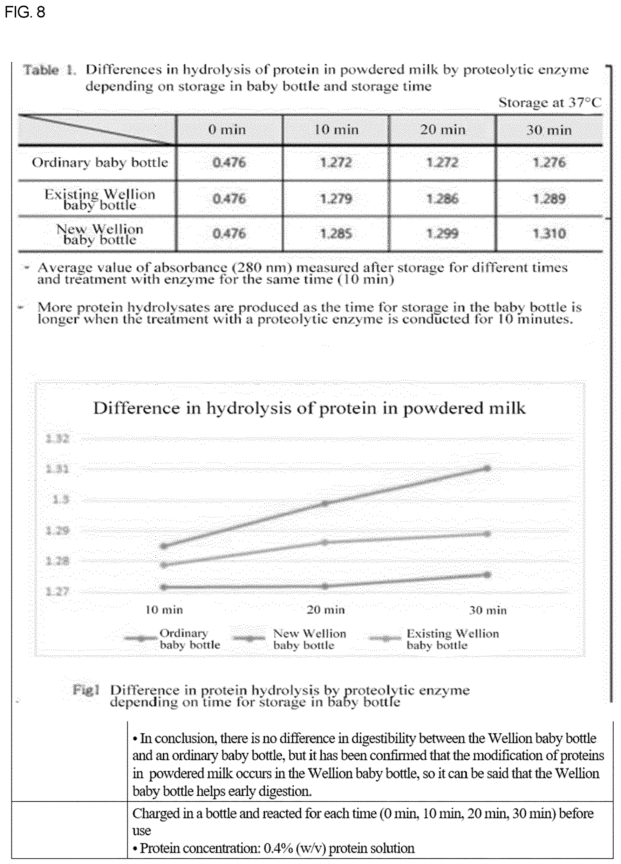

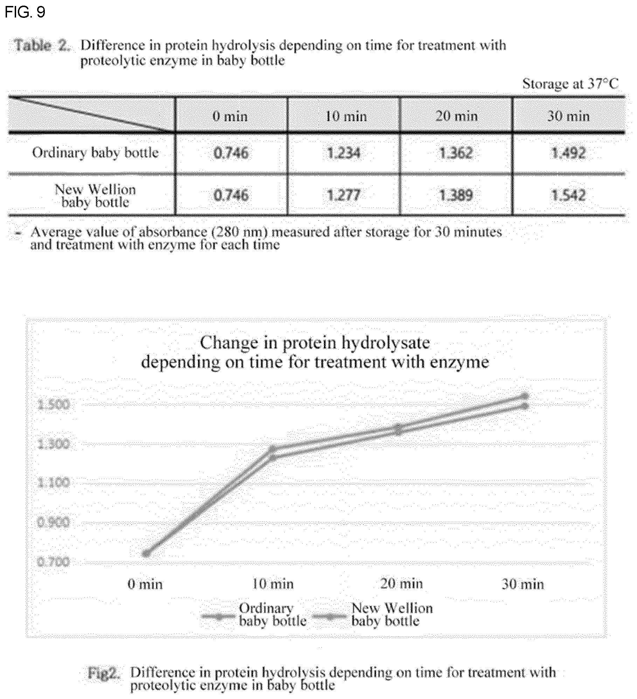

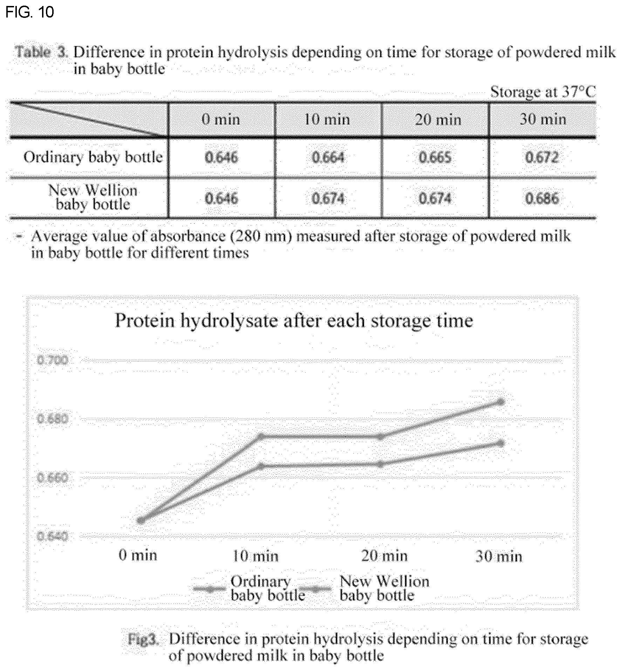

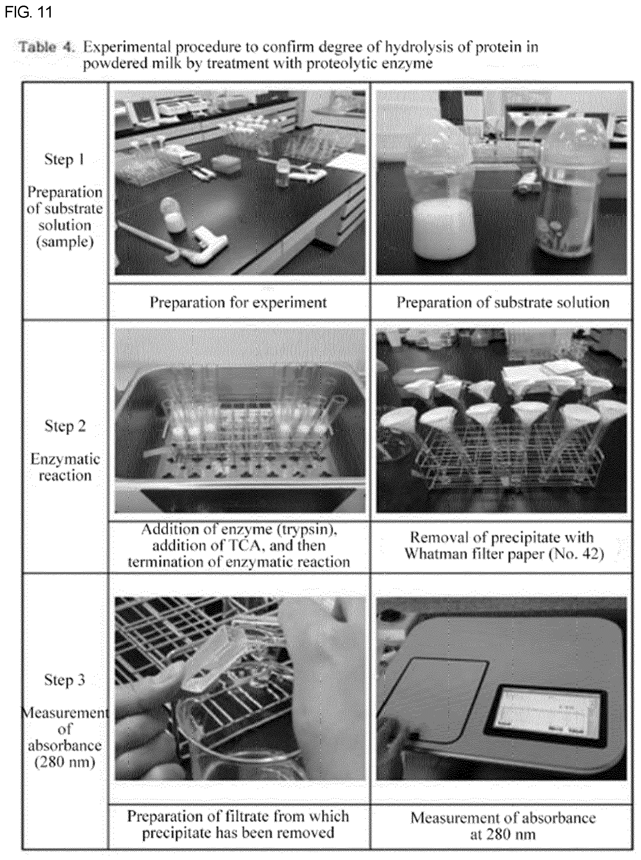

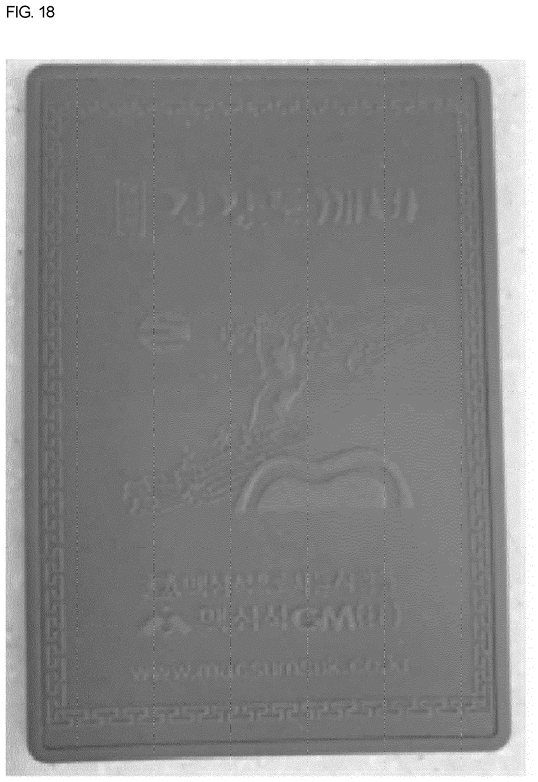

It was commissioned to a baby bottle manufacturer to place Macsumsukdokkaebi (silicone rubber) [FIG. 18] manufactured from the silicone rubber composition of Example 2 in the middle of a baby bottle-type container. An experiment to confirm the degree of modification of proteins in powdered milk was then commissioned to the Research Center of Food Science, KYUNGIL UNIVERSITY, and the experimental report is illustrated in FIGS. 4 to 11.

In the report of FIGS. 4 to 11, the 'new Wellion baby bottle' is a baby bottle manufactured using the rubber composition of Example 2 as a raw material, and the 'ordinary baby bottle' and the 'Wellion baby bottle' manufactured using a masterbatch in which a PPSU (polyphenylsulfone) substance is mixed with Macsumsuk granules refer to baby bottles distributed in the market.

As illustrated in FIGS. 4 to 11, it has been found that the largest amount of protein hydrolysates was produced in the baby bottle manufactured using the silicone rubber composition of the present invention as a raw material, and the difference in protein hydrolysis between the ordinary baby bottle and the baby bottle of Example depending on the lapse of storage time increases as time passes.

### <Experimental Example 3> Experiment on antibacterial properties in water

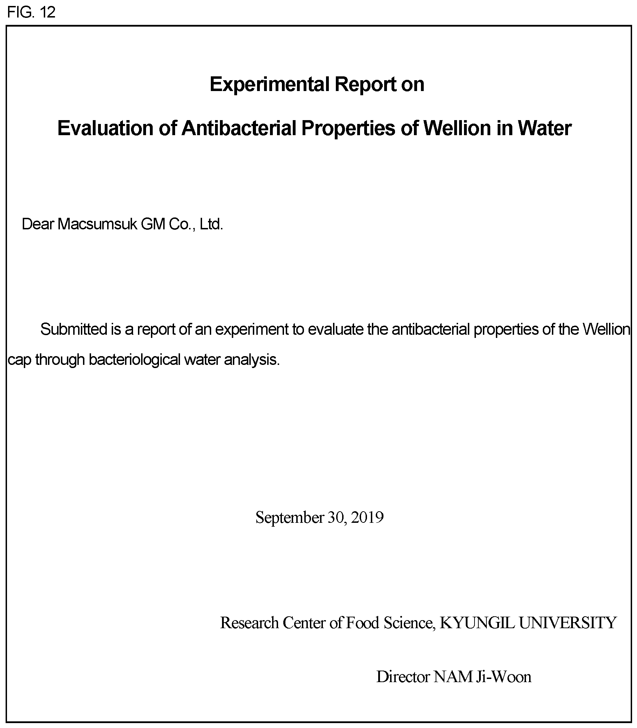

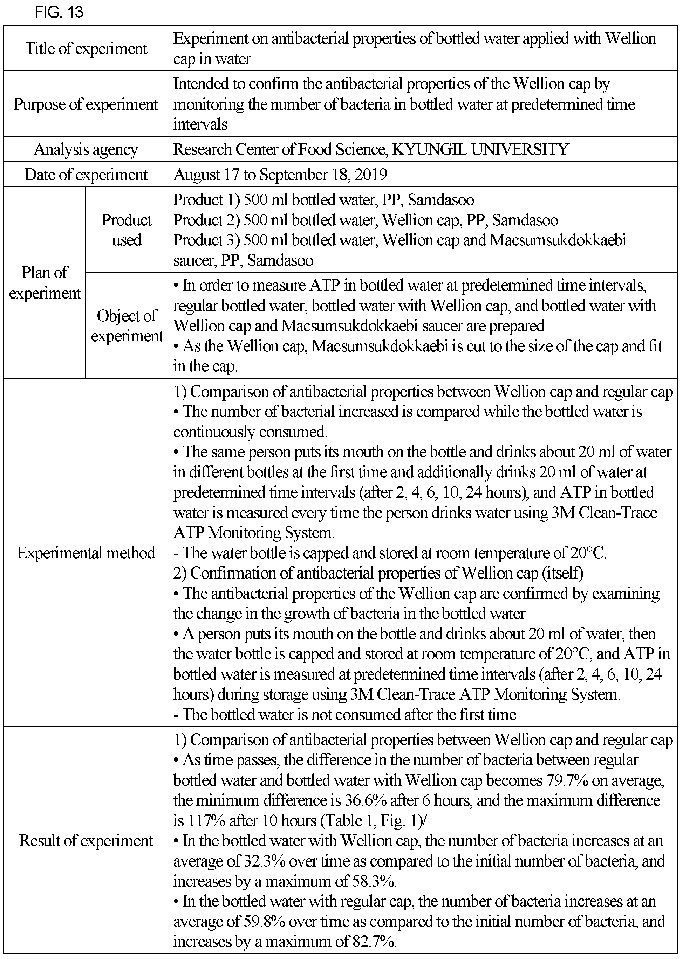

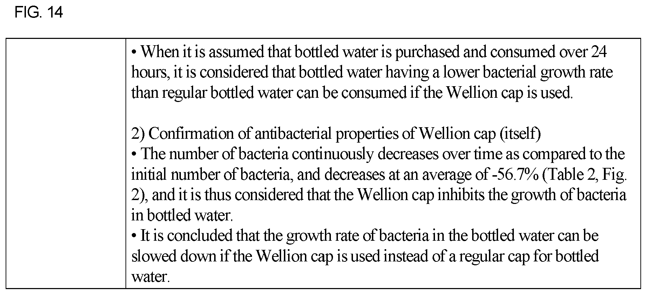

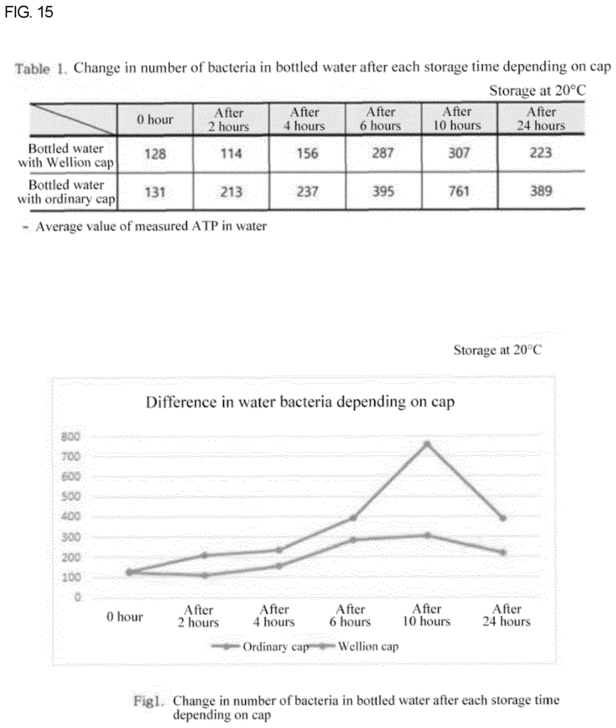

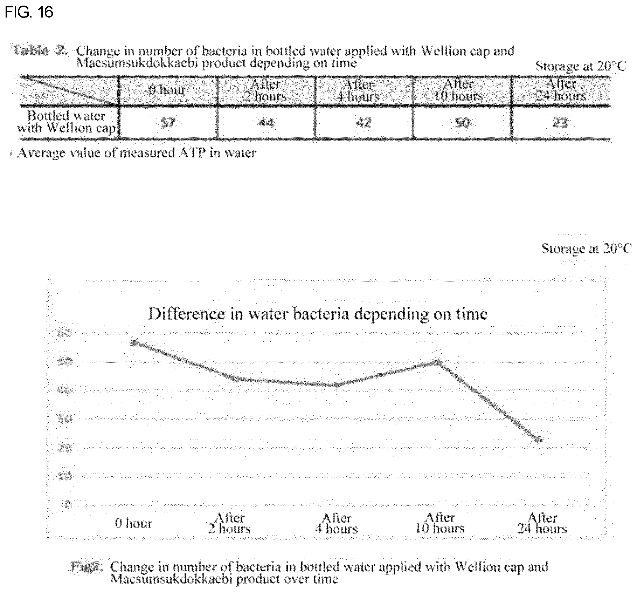

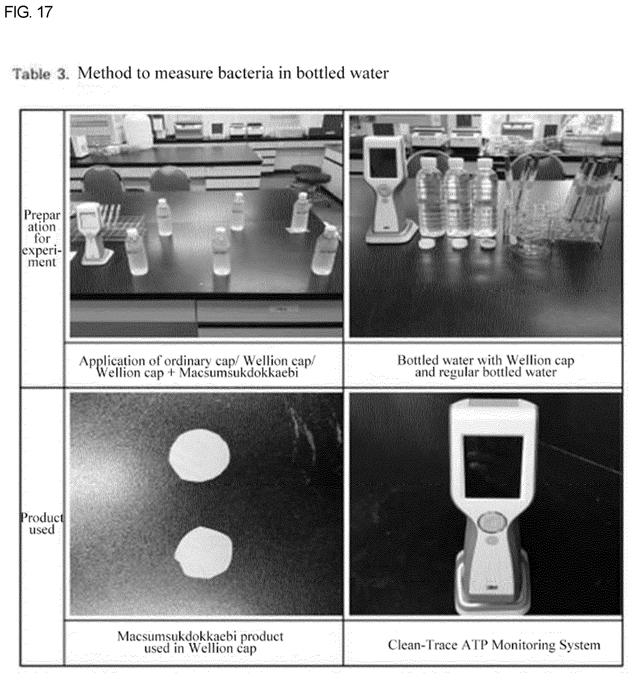

It was commissioned to a film manufacturer to cut Macsumsukdokkaebi (silicone rubber) [FIG. 18] manufactured using the silicone rubber composition of Example 2 as a raw material to the size of the inner cap of the disc-shaped bottle cap of a water bottle, and fix the cut Macsumsukdokkaebi in the inner cap. An experiment on antibacterial properties in water was then commissioned to the Research Center of Food Science, KYUNGIL UNIVERSITY, and the experimental report is illustrated in FIGS. 12 to 17.

As illustrated in FIGS. 12 to 17, the inner cap to which the silicone rubber composition of Example 2 is applied exhibits higher antibacterial properties than the control to which a regular cap is applied.

### <Example 4> Manufacture of silicone rubber composition 3

A composition was manufactured in the same manner as in Example 2 except that 8% by weight of Macsumsuk granules was mixed with 91% by weight of a silicone composition and 1 % by weight of walnut inner shell powder.

The walnut inner shell refers to the powder of very hard shell on the outside of endocarp.

### <Experimental Example 4> Experiment to measure mechanical properties

The mechanical properties of the specimens fabricated using the rubber compositions of Examples 2 to 4 were measured as follows, and the results are presented in Table 4.

First, a specimen was fabricated and the hardness thereof was measured in conformity with ASTM D2240.

Specifically, the hardness indicates the degree to which silicone rubber is hard. In the case of general thermosetting silicone rubber, the hardness ranges from a minimum hardness of 15 to 20 degrees to a maximum hardness of 90 degrees. The measuring instrument used is a SHORE A type hardness tester, the measurement is performed by overlapping three 6 mm thick specimens or three 2 mm thick specimens and on the inside by 1/2 inch or more from the edge, and the value is read within one second after the needle have come into contact with the specimen. The measurement is repeated five times or more and the average value is displayed as the hardness value.

The degree of plasticity indicates the degree of softness or spreadability of rubber. When the plasticity is low (too soft), it is difficult to pull out the sheet at the time of working using a two-roll mill, and the rubber breaks easily although the rubber is required to be continuously injected without breaking in the form of a long ribbon when injected into an injection machine, and this interferes with the injection operation using an injection machine. Using Plastometer as the measuring instrument and the Williams Plasticity measurement method of JISK6249, the rubber is plasticized (softened) for 5 minutes, undergoes a defoaming process for 2 minutes, then sampled in a mass to be two times the specific gravity, and cooled for 5 minutes, and then the degree of spreading of the sampled rubber for 5 minutes under a load of 5 kg is expressed as a numerical value.

Tearing strength is a numerical measure of how well rubber withstands a small tear due to minor scratches or impacts in the environment of use, and the force applied per unit length is measured. The measuring instrument used is the Universal Testing Machine, and the tearing strength is measured by pulling a silicon rubber specimen fabricated in conformity with the standard of ASTM D624-DIEC (DUMBBLE TYPE) by the measuring instrument at a speed of 500 mm/min. The measurement is performed on four specimens and the average value is taken as the tearing strength.

Tensile strength is the numerical value of the maximum stress force per unit area of a silicone rubber specimen and represents how well the silicone rubber specimen withstands force. The tensile strength is expressed in MPa and pound units. The measuring instrument used is the Universal Testing Machine, and the tensile strength is measured by pulling a silicone rubber specimen fabricated in conformity with the standard of ASTM D412 by the measuring instrument at a speed of 500 mm/min. The measurement is performed on four specimens and the average value is taken as the tensile strength.

In Table 4 below, the unit of hardness is Shore A, the unit of tearing strength is N/mm, the unit of tensile strength is Mpa, and plasticity does not have a unit.

**[Table 4]**

| Division | Hardness | Plasticity | Tensile strength | Tearing strength |
|---|---|---|---|---|
| Comparati ve Example | 62 | 220 | 8.5 | 19.0 |
| Example 2 | 59 | 219 | 8.3 | 18.8 |
| Example 3 | 58 | 221 | 8.1 | 18.4 |
| Example 4 | 63 | 220 | 8.7 | 19.2 |

As can be seen from Table 4 above, there is little difference in physical properties between a specimen manufactured using the silicone rubber composition according to the present invention and a specimen manufactured using a pure silicone rubber composition. Here, it has been confirmed that the physical properties are superior to those of the specimen manufactured using a pure silicone rubber composition when a small amount of walnut inner shell powder is added as in Example 4.

### Industrial Applicability

The silicone rubber composition according to the present invention can be applied to the manufacture of various known silicone rubber products such as baby bottles, water bottles, water cups, cutting boards, medical containers, food trays, medical equipment sheets, bedding sheets, shoe insoles, wrapping paper, boards for desk, cushions, storage containers, storage bottle caps, agricultural boards, and sheets for vehicle.

## Claims

1. A method for manufacturing a far-infrared ray- and anion-emitting silicone rubber composition using Macsumsuk granules, the method comprising:
a slurry manufacturing step of sintering pulverized Macsumsuk to obtain a sintered compact and then mixing the sintered compact with water at a weight ratio of 2:1 to obtain a slurry;
a first mixing step of adding an antibacterial substance and a foaming agent to the slurry to obtain a granulation mixture;
a granule molding step of processing the granulation mixture by a spray drying method using a granulator to manufacture Macsumsuk granules having an average particle size in a range of 0.1 to 1.5 mm; and
a second mixing step of preparing a silicone composition containing a methyl ethyl ketone-soluble substance, an alkenyl cyanide, and a styrene resin and a walnut inner shell powder,
and then mixing 8% by weight of the prepared Macsumsuk granules, 91% by weight of the silicone composition, and 1% by weight of the walnut inner shell powder together to manufacture a silicone rubber composition.

2. The method for manufacturing a far-infrared ray- and anion-emitting silicone rubber composition using Macsumsuk granules according to claim 1, wherein the antibacterial substance contains 0.3 to 1.5 parts by weight of titanium dioxide, 0.001 to 0.01 parts by weight of silver nanoparticles, and 0.1 to 0.5 parts by weight of zirconium oxide based on 100 parts by weight of the slurry.

3. The method for manufacturing a far-infrared ray- and anion-emitting silicone rubber composition using Macsumsuk granules according to claim 2, wherein the foaming agent contains calcium carbonate and sodium carbonate mixed at a weight ratio of 1:1, and is added at 0.15 to 1.5 parts by weight based on 100 parts by weight of the slurry.

4. A far-infrared ray- and anion-emitting silicone rubber composition using Macsumsuk granules, which is manufactured by the manufacturing method according to any one of claims 1 to 3.
